# EUROPEAN PATENT SPECIFICATION

(11) **EP 3 710 979 B1**
(45) Date of publication and mention of the grant of the patent: **09.09.2026**
(21) Application number: 18803909.3
(22) Date of filing: 09.11.2018
(51) Int. Cl.: B60T 8/17, B62J 27/00, B62M 7/12

(54) **APPARATUS AND METHOD FOR CONTROLLING A VEHICLE**
VORRICHTUNG UND VERFAHREN ZUR STEUERUNG EINES FAHRZEUGS
APPAREIL ET PROCÉDÉ DE COMMANDE D'UN VÉHICULE

(30) Priority: 17.11.2017 GB 201719052
(43) Date of publication of application: 23.09.2020
(73) Proprietor: Jaguar Land Rover Limited, Coventry, Warwickshire CV3 4LF (GB)
(72) Inventor: TRUMAN, Mark, Coventry Warwickshire CV3 4LF (GB)
(74) Representative: Jaguar Land Rover Patents Department
(86) International application number: PCT/EP2018/080733
(87) International publication number: WO 2019/096682

(56) References cited:
- WO-A1-2005/013816
- JP-A- 2016 068 769
- US-A1- 2011 233 994
- US-A1- 2015 274 019
- US-A1- 2016 242 680
- US-A1- 2017 257 934

## Description

### TECHNICAL FIELD

The present disclosure relates to a method, comprising: determining a posture of a rider of a motorcycle.

### BACKGROUND

It is known to provide electric vehicles with an electric machine associated with at least one wheel of the electric vehicle, which may provide propulsion torque, when desired, to the wheel. The electric machine may also operate in a regeneration mode where electrical energy is generated responsive to rotation of the motor caused by the wheel, such as when the vehicle is decelerating. In the regeneration mode the electric machine applies a regenerative braking torque to the wheel. Where the electric vehicle is a motorcycle having less than four wheels, such as a two-wheeled motorcycle, regenerative braking torque may be observed i.e. felt by a rider of the motorcycle. Particularly, although not exclusively, if the electric machine is associated with a front wheel of the motorcycle, the regenerative braking torque may appear unconventional to riders of rear-wheel driven motorcycles which only demonstrate a noticeable reductive torque through engine braking of the rear wheel. The document US 2015/274019 A1 discloses a method, comprising: determining a regeneration control signal in dependence on the posture of the motorcycle; applying a regenerative braking torque to at least one wheel of the motorcycle in dependence on the regeneration control signal.

It is an object of embodiments of the invention to at least mitigate one or more of the problems of the prior art.

### SUMMARY OF THE INVENTION

According to the invention, there is provided a method, comprising determining a posture of a rider of a motorcycle and determining a regeneration control signal in dependence on the determined posture of the rider of the motorcycle. The method may comprise applying a regenerative braking torque to at least one wheel of the motorcycle according to the regeneration control signal.

The method optionally comprises receiving a signal from one or more sensors associated with motorcycle clothing worn by the rider of the motorcycle, the signal being indicative of the posture of the rider of the motorcycle.

A system is described which comprises posture determining means arranged to determine a posture of a rider of the motorcycle in dependence on a posture signal output by one or more sensing means associated with motorcycle clothing worn by the rider of the motorcycle and regeneration control means arranged to determine the regeneration control signal in dependence on the determined posture of the rider of the motorcycle.

A motorcycle for use with motorcycle clothing is described which comprises one or more sensing means, comprising an electric machine associated with at least one wheel of the motorcycle, wherein said electric machine is operable in a regeneration mode to apply a regenerative braking torque to the at least one wheel according to a regeneration control signal, posture determining means arranged to determine a posture of a rider of the motorcycle in dependence on a posture signal output by the one or more sensing means associated with the motorcycle clothing worn by the rider of the motorcycle; and regeneration control means arranged to determine the regeneration control signal in dependence on the determined posture of the rider of the motorcycle. Advantageously the regenerative braking torque is determined without explicit rider input. Advantageously the regenerative braking torque is determined in dependence on the rider's posture, which may reflect a style of riding of the motorcycle by the rider.

A motorcycle as described above, wherein the:
the posture determining means is an apparel communication device; and
the regeneration control means is a motor control unit.

The posture may comprise one or more of an inclination of at least a portion of a torso of the rider of the motorcycle, an extension of at least one arm or leg of the rider of the motorcycle, and a lean angle of the rider of the motorcycle about a longitudinal axis of the motorcycle. Advantageously the configuration of said body parts may be indicative of the posture of the rider.

The posture determining means may be arranged to, in use, wirelessly receive a representation of the posture signal from the one or more sensing means. Advantageously the wireless reception is convenient for the rider. Advantageously the posture determining means may determine the rider's posture based on the posture signal.

The posture determining means may be arranged to, in use, wirelessly receive an indication of a determined posture of the rider of the motorcycle. Advantageously the posture of the rider is determined and a signal indicative thereof provided to the posture determining means.

The posture determining means may be arranged to receive a control map for the electric machine, wherein the control map is associated with a determined posture of the rider of the motorcycle. Advantageously the control map may be used to determine the regeneration torque. Where the control map is received by the motorcycle, the control map may be associated with the rider, i.e. pre-selected by, to be associated with the determined posture.

The regeneration control signal is, optionally, indicative of the regenerative braking torque applied to the at least one wheel of the motorcycle by the electric machine in the regeneration mode. Advantageously the control signal may be used to control the regenerative braking torque.

The regeneration control means may be arranged to determine the regeneration control signal indicative of a relatively lower regenerative braking torque when said posture of the rider of the motorcycle is indicative of an upper torso of the rider of the motorcycle being generally parallel to the motorcycle. Advantageously less regenerative braking torque is applied when said rider is in a lower, sportier, aerodynamic position on the motorcycle.

The regeneration control means may be arranged to determine the regeneration control signal indicative of a relatively greater regenerative braking torque when said posture of the rider of the motorcycle is indicative of an upper torso of the rider of the motorcycle being generally perpendicular to the motorcycle. Advantageously greater regenerative braking torque may be applied when the rider is braced suitable for the application of regenerative braking torque.

Optionally the regeneration control means is arranged to determine a vehicle state of the motorcycle and to determine the regeneration control signal in dependence on the vehicle state. Advantageously the regeneration control signal may account for the vehicle state.

The vehicle state may be indicative of one or more controls operated by the rider of the motorcycle. Advantageously the operation of the control(s) of the motorcycle may influence the regenerative braking torque.

The vehicle state may comprise a state of a brake control. Advantageously operation of the brake control may be taken into account when determining the regeneration braking torque.

The state of the brake control may be indicative of a magnitude of rider-requested braking torque and the regeneration control means is arranged to determine the regeneration control signal indicative a proportion of the rider-requested braking torque as regenerative braking torque. Advantageously the magnitude of regenerative braking torque may be proportional to the magnitude of rider-requested braking torque. Advantageously the regenerative braking torque may form part of the rider-requested braking torque.

The regeneration control signal may be indicative of the proportion of the rider-requested braking torque as regenerative braking torque to friction-based braking torque. Advantageously the rider-requested braking torque may be formed by the regenerative braking torque and the friction-based braking torque. Advantageously the relative composition of regenerative braking torque and the friction-based braking torque may be controlled according to the posture of the rider.

The vehicle state may comprise one or more of a speed of the motorcycle, a lean angle of the motorcycle, an accelerator rider input. Advantageously other conditions of the motorcycle may influence the level of regenerative braking torque.

The electric machine is optionally associated with a front wheel of the motorcycle. Advantageously control of regenerative braking torque applied to the front wheel, which may be sensed more by the rider, is provided.

The motorcycle optionally comprises a power storage means, wherein the electric machine is arranged to output an electric current to recharge the power storage means in the regeneration mode. Advantageously the power storage means is charged during use of the motorcycle.

Embodiments utilise motorcycle clothing, comprising sensing means for determining a posture of a motorcycle rider wearing said clothing and outputting a posture signal indicative thereof.

The motorcycle clothing as described above, wherein the sensing means comprises one or more sensing devices.

The motorcycle clothing optionally comprises a plurality of sensing means each arranged at a respective location about the clothing for sensing an attribute associated with the location about the rider and outputting a posture signal indicative thereof.

At least some of the sensing means may be pressure sensing means for sensing a pressure exerted on the clothing by the rider and outputting the posture signal indicative thereof.

At least some of the sensing means may be angle sensing means for sensing an angle between portions of the sensing means and outputting the posture signal indicative thereof.

The motorcycle clothing optionally comprises clothing control means for receiving the posture signal from each sensing means and outputting a representation thereof. The clothing control means may be a clothing control device.

According to a yet further embodiment, there is provided a system comprising the motorcycle according to the above and the motorcycle clothing according to the above.

According to another embodiment, there is provided a method, comprising:
determining a posture of a rider of a motorcycle in dependence on a posture signal output by one or more sensing means associated with motorcycle clothing worn by a rider of a motorcycle, determining a regeneration control signal in dependence on the posture of the rider of the motorcycle, and applying a regenerative braking torque to at least one wheel of the motorcycle in dependence on the regeneration control signal.

The posture optionally comprises one or more of an inclination of at least a portion of a torso of the rider of the motorcycle, an extension of at least one arm of the rider of the motorcycle, and a lean of the rider of the motorcycle about a longitudinal axis of the motorcycle.

The method may comprise receiving the posture signal from the one or more sensing means associated with the motorcycle clothing. The posture signal may be wirelessly received.

The method may comprise receiving an indication of a determined posture of the rider of the motorcycle.

The method may comprise receiving a control map for the electric machine, wherein the control map is associated with a determined posture of the rider of the motorcycle.

The regeneration control signal is optionally determined to be indicative of a relatively lower regenerative braking torque when said posture of the rider of the motorcycle is indicative of an upper torso of the rider of the motorcycle being generally parallel to the motorcycle.

The regeneration control signal is optionally determined to be indicative of a relatively greater regenerative braking torque when said posture of the rider of the motorcycle is indicative of an upper torso of the rider of the motorcycle being generally perpendicular to the motorcycle.

The method may comprise determining a vehicle state of the motorcycle wherein the regeneration control signal is determined in dependence on the vehicle state.

The vehicle state may be indicative of one or more controls operated by the rider of the motorcycle.

Determining the vehicle state optionally comprises one or more of determining a speed of the motorcycle, determining a lean angle of the motorcycle, determining an accelerator rider input, and determining a brake rider input.

The brake rider input may be indicative of a magnitude of rider-requested braking torque. The method optionally comprises determining the regeneration control signal indicative a proportion of the rider-requested braking torque as regenerative braking torque.

Optionally the method comprises determining the regeneration control signal indicative of the proportion of the rider-requested braking torque as regenerative braking torque to friction-based braking torque.

According to an embodiment, there is provided computer software which, when executed by a computer, is arranged to perform a method according to the above. The computer software may be stored on a computer-readable medium. The computer software may be tangibly stored on the computer readable medium. The computer-readable medium may be non-transitory.

### BRIEF DESCRIPTION OF THE DRAWINGS

One or more embodiments of the invention will now be described by way of example only, with reference to the accompanying drawings, in which:
Figure 1 shows a vehicle according to an embodiment of the invention;
Figure 2 shows a garment of motorcycle clothing according to an embodiment of the invention;
Figure 3 shows a schematic illustration of a system according to an embodiment of the invention;
Figure 4 shows a method according to an embodiment of the invention; and
Figure 5 shows an illustration of posture of a motorcycle rider according to an embodiment of the invention.

### DETAILED DESCRIPTION

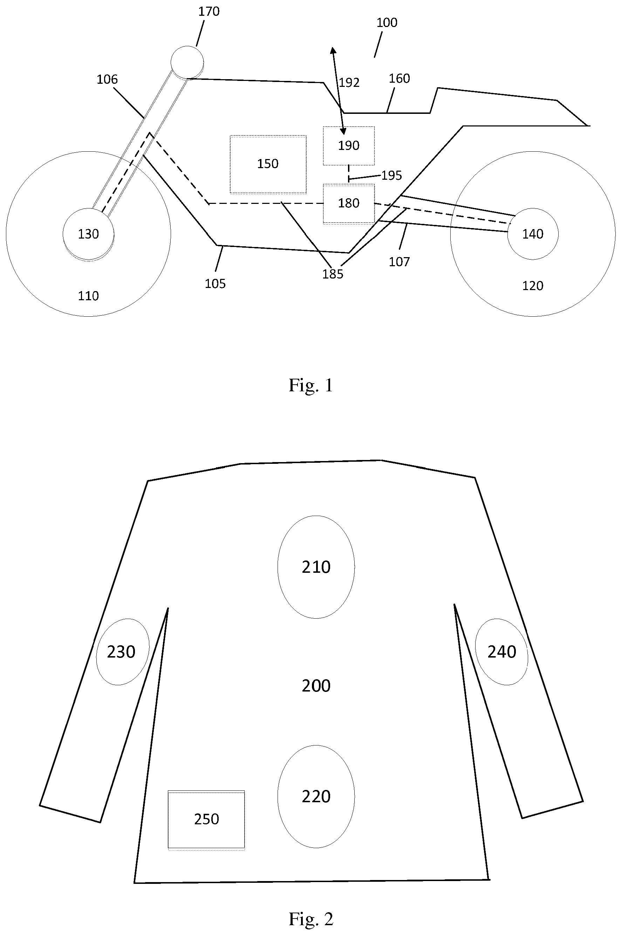

Figure 1 shows a vehicle 100 according to an embodiment of the invention. The vehicle 100 is an electric vehicle 100 which comprises a power storage means 150 for storing electrical energy therein for, at least partially, propelling the vehicle 100. In the embodiment illustrated in Figure 1 the vehicle 100 is a two-wheeled vehicle 100 comprising a first wheel 110 and a second wheel 120. The two wheels 110, 120 are arranged in alignment along a longitudinal axis of the vehicle 100, such that the first wheel 110 is forward of the second wheel 120. The vehicle 100 may be a motorcycle 100. The first wheel 110 of the motorcycle is used for steering of the motorcycle. Other embodiments of motorcycle 100 may be envisaged such as a tricycle comprising two wheels separated in a transverse axis of the vehicle 100.

The motorcycle 100 comprises at least one electric machine 130, 140 associated with at least one of the wheels 110, 120 of the motorcycle 100. The motorcycle 100 illustrated in Figure 1 comprises two electric machines 130, 140 each associated with a respective wheel 110, 120 of the motorcycle 100. A first electric machine 130 is associated with the first, forward, wheel 110 of the motorcycle 100. A second electric machine 140 is associated with the second, rear, wheel 120 of the motorcycle 100. One or both of the electric machines 130, 140 may be used to provide propulsion or driving torque to the respective wheel 110, 120 of the motorcycle 100. The propulsion torque may be applied responsive to an input received from a rider of the motorcycle, which may be provided via an accelerator control, such as attached to a handlebar 170 of the motorcycle 100. One or more signals indicative of the rider's input applied to one or more controls of the motorcycle 100, such as the accelerator control, are received by a motor control unit 180 of the motorcycle 100. The motor control unit 180 may comprise one or more motor control maps stored therein, such as in a memory of the motor control unit 180, which enable the motor control unit 180 to, in use, determine an amount of propulsion torque to be applied by one or both of the electric machines 130, 140 corresponding to the input applied to the one or more controls of the motorcycle 100. The motor control unit 180 operatively outputs at least one motor control signal 185 to the first and second electric machines 130, 140 wherein the motor control signal 185 is indicative of the respective propulsion torque to be applied by each electric machine 130, 140 in a propulsion mode. The motor control unit 180 may comprise one or more processing devices which operatively execute computer-readable instructions to determine the motor control signal 185. The motor control unit 180 may receive one or more additional inputs indicative of a state of the motorcycle 100 to determine the motor control signal 185. The one or more inputs may comprise inputs indicative of a lean angle of the motorcycle 100 or a speed of one or more of the wheels 110, 120 of the motorcycle.

Further description of embodiments of the present invention will be made with reference to the first wheel 110 of the motorcycle, although it will be appreciated that embodiments of the invention may be applied with respect to the second, or other, wheel of the motorcycle 100.

The motorcycle comprises a body 105, such as formed by bodywork attached to a frame (not shown), from which the wheels 110, 120 are suspended via one or more intermediate components such as forks 106 and a swing-arm 107 of the motorcycle 100. In some embodiments a front swing-arm replaces the forks 106. The power storage means 150 may be suspended within the body 105 such about the frame of the motorcycle. The power storage means 150 may be formed by one or more batteries or cells which store electrical energy therein and provide electrical energy to the one or more electric machines 130, 140. The power storage means 150 may be recharged by electrical energy provided from the one or more electric machines 130, 140 when the electric machine(s) 130, 140 are operative in a regeneration mode, as will be explained.

In one embodiment, the first electric machine 130 associated with the first wheel 110 may be selectively operated in the regeneration mode to generate electrical energy which is stored in the power storage means 150. When said electric machine 130 is operated in the regeneration mode, the first electric machine 130 applies a regenerative braking torque to the first wheel 110. The regenerative braking torque applied by the first electric machine 130 is generated by the first electric machine 130 in dependence on the motor control signal 185 provided to the first electric machine 130 by the motor control unit 180. The motor control signal 185 comprises a regeneration control signal 185 which is indicative of a magnitude of the regenerative braking torque applied to the first wheel 110 by the electric machine 130 in the regeneration mode. The regeneration control signal may be determined by the motor control unit 180 in dependence on the one or more motor control maps stored therein.

However a requirement for the rider to set, during use of the motorcycle 100, the magnitude of the regenerative braking torque may be onerous for the rider of the motorcycle 100. For example, the rider of the motorcycle 100 may wish to have different levels of regenerative braking torque applied at different times during riding, even differing between individual corners. It will be appreciated that the motorcycle 100 may comprise a friction-based braking system for applying a further, or alternative, friction-based braking torque to the motorcycle 100, which may be applied via a hydraulic braking system of the motorcycle. In some embodiments, the friction-based braking system includes one or more abrasive members, such as brake pads or shoes, which are operatively brought into contact with a disk or drum associated with at least one wheel of the motorcycle. The friction-based braking torque may be applied in dependence on an input provided to one or more braking controls of the motorcycle such as arranged upon the handlebars 170 and proximal to a footrest or footpeg of the motorcycle 100. Further, an overrun braking torque may also be experienced due to, for example, friction losses or drive losses, such as between the electric machine 130 and first wheel 110.

In some embodiments, regenerative braking torque and friction-based braking torque are applied to at least one wheel of the motorcycle to provide a total rider-controlled braking torque by which the rider may intentionally control deceleration of the motorcycle. A total magnitude of the rider-controlled braking torque may be determined by the rider operating the one or more braking controls of the motorcycle 100. In some embodiments, a relative proportion of the regenerative braking torque to the friction-based braking torque may be controlled by the motor control unit 180, as indicated by the regeneration control signal 185 provided to the first electric machine 130. The proportion of the regenerative braking torque to the friction-based braking torque may be controlled by the motor control unit 180 to provide a natural riding experience for the rider of the motorcycle 100, as will be explained.

The motorcycle 100 further comprises an apparel communication means (ACM) 190. The ACM 190 is provided for communicating 192 with apparel worn by the rider of the motorcycle 100. The apparel communication means may be an apparel communication device. The apparel communication device may comprise a communication module and a processing device for executing computer readable instructions which may be stored in a memory of the apparel communication device.

The ACM 190 is arranged to communicate with the apparel, in particular with a control means thereof as will be explained, and to provide one or more signals 195 to the motor control unit 180 of the motorcycle 100. In some embodiments, the ACM 190 may provide a signal 195 indicative of a selection of a motor control map to the motor control unit 180. In other embodiments, the ACM 190 may provide a motor control map to the motor control unit 180. The motor control map may be received, in some embodiments, from the control means of the apparel with which the ACM 190 is communicatively coupled, in use, as will be explained.

Figure 2 illustrates motorcycle apparel 200 according to an embodiment of the invention. The apparel 200 is suitable to be worn by a rider of the motorcycle 100. The apparel 200 may be, for example, a back protector which, in use, covers at least a portion of the rider's back. As illustrated in Figure 2, the apparel 200 is clothing 200, or a garment, according to an embodiment of the invention.

Figure 2 illustrates an item of motorcycle clothing or garment which is, in the illustrated embodiment, a jacket 200. It will be appreciated, however, that embodiments of the invention are not limited in this respect and that other garments may be envisaged, such as trousers, dungarees, one- or two-piece suits, underwear or other clothing suitable for wearing whilst riding the motorcycle 100. The motorcycle clothing 200 may comprise armour for protecting the rider in the event of an accident. The motorcycle clothing 200 comprises sensing means 210, 220, 230, 240 for determining a posture of the rider wearing said clothing. A clothing control means (CCM) 250 is communicatively coupled to each of the sensing means 210, 220, 230, 240 for receiving a signal there-from. In some embodiments the CCM 250 is arranged to output a posture signal in dependence thereon. In some embodiments the output signal is indicative of the determined posture of the rider. The CCM 250 is, in use, communicatively coupled with the ACM 190 of the motorcycle 100. The CCM 250 and ACM 190 may communicate wirelessly. The wireless communication may be according to a predetermined protocol, such as Bluetooth, although other protocols may be used. The wireless communication may comprise security such as authentication and/or encryption in order to provide secure communication between the ACM 190 and CCM 250. The CCM 250 may be a clothing control device which may comprise one or more processing devices which operatively execute computer-readable instructions. The CCM 250 may comprise a memory for storing one or both of data, such as at least one motor control map, and the computer-readable instructions.

The sensing means 210, 220, 230, 240 may comprise one or more sensing devices 210, 220, 230, 240 associated with the clothing 200. Each sensing device 210, 220, 230, 240 may be located at a respective location about the clothing 200. The one or more sensing devices 210, 220, 230, 240 may output a signal indicative of an attribute of the respective location about the clothing's interaction with rider wearing the clothing 200. In one embodiment, one or more of the sensing devices 210, 220, 230, 240 is a pressure sensing device for sensing a pressure exerted on the clothing 200 by the rider wearing said clothing 200. The pressure may be a pressure exerted outward on the clothing 200, i.e. from inside the clothing 200, by the rider. For example, when an arm of the rider is bent, greater pressure may be exerted on an elbow region of the clothing 200, particularly on a rear surface of the clothing, by the curvature of the arm. Similarly where the clothing 200 comprises trousers, or the like, a pressure sensor in the region of the rider's knee can be used to detect a pressure exerted outwardly, such as against a front surface of the clothing, by the knee. Similarly the back of the rider may exert outward pressure on a back portion of the jacket 200. In another embodiment, one or more sensing devices 210, 220, 230, 240 may be arranged to determine a relative angle between portions of the sensing device to determine the curvature applied to a portion of the clothing, such as the arm of the jacket 200 or knee of the trouser leg.

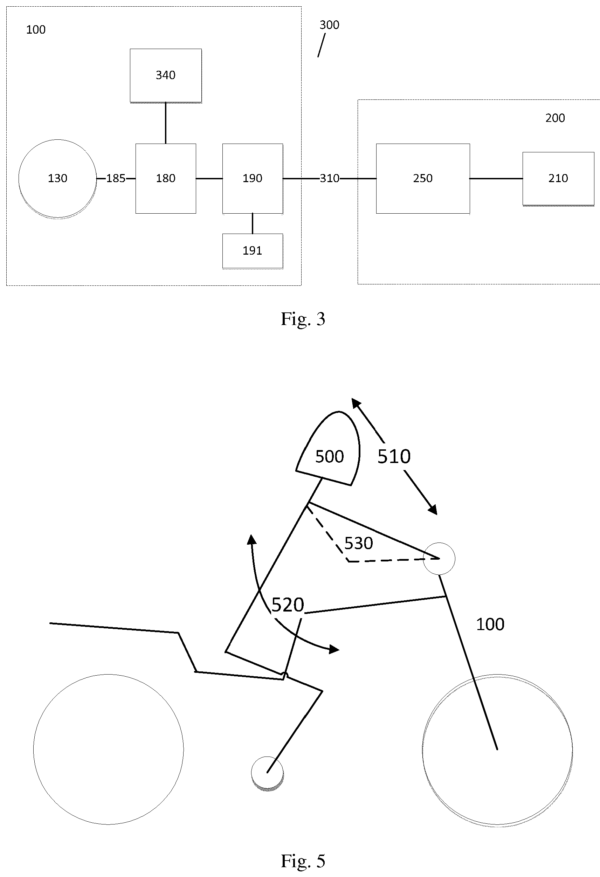

As noted above, the clothing 200 comprises the CCM 250. The CCM 250 is communicably coupled with the sensing devices 210, 220, 230, 240 of the clothing 200. In one embodiment each of the sensing devices is connected to the CCM 250 by a wired connection such that a posture signal output by each sensing device 210, 220, 230, 240 is received by the CCM 250. The CCM 250 is arranged to communicate a signal in dependence on the one or more posture signals to the motorcycle 100, as will be explained with reference to Figure 3. The CCM 250 may communicate the signal wirelessly to the motorcycle 100 in order to avoid inconvenience of a wired connection between the clothing 200 and the motorcycle 100. The signal communicated from the CCM 250 may be a wireless representation of the received one or more posture signals, or signal determined in dependence thereon, such as an indication of the posture of the rider as determined by the CCM 250. In some embodiments, the CCM 250 is arranged to determine the posture of the rider and to select a motor control map in dependence thereon. The signal communicated to the ACM 190 may be indicative of a selection of one of a plurality of motor control maps stored in the ACM 190, or may be the motor control map which is communicated from the CCM 250 to the ACM 190.

Figure 3 is a schematic illustration of a system 300 according to an embodiment of the invention. The system 300 is formed by the motorcycle 100 and the apparel 200, such as clothing, according to an embodiment of the invention, as illustrated by dotted outlines in Figure 3. In use the clothing 200 is communicably coupled to the motorcycle 100 as indicated by line 310 which represents an operative data connection there-between, which may be a wireless connection. The data connection may be used to, in particular although not exclusively, transmit data from the CCM 250 to the ACM 190.

The motorcycle 100, as illustrated in Figure 3, comprises the ACM 190 which is arranged to determine the posture of the rider of the motorcycle 100. The posture is determined by the ACM 190 in dependence on the one or more posture signals output by one or more sensing devices 210, 220, 230, 240 associated with the motorcycle clothing 200 worn by the rider of the motorcycle 100. The AMC 190 may be arranged to wirelessly receive from the CCM 250 data indicative of the one or more posture signals.

Each of the ACM 190 and the CCM 250 may comprise a respective wireless communication module, such as a Bluetooth communication module (although other protocols may be used) which allow wireless communication there-between in the form of the data connection 310. In one embodiment, the CCM 250 communicates to the ACM 190 a representation of the one or more posture signals, wherein the ACM 190 is arranged to determine the posture of the rider based thereon. In other embodiments, the CCM 250 is arranged to determine the posture of the rider based on the one or more posture signals and to communicate data indicative of the determined posture to the ACM 190. In still other embodiments, the CCM 250 is arranged to determine the posture of the rider based on the one or more posture signals and to select a motor control map from amongst a plurality of motor control maps stored accessible to the CCM 250, and to communicate the selected motor control map to the ACM 190.

The posture of the rider of the motorcycle 100 may be determined as will be explained further with reference to Figure 5. The posture may be determined as one of a plurality of predetermined postures or one of a plurality of posture groupings. A posture grouping may be a group of postures having at least one posture attribute in common. For example, posture signals indicative of the rider's back being bent, i.e. beyond a threshold, may be used to determine that the posture of the rider belongs to a posture grouping having a bent back, such as a "hunkered down" or "sporty" posture, it being appreciated that other posture groupings may be envisaged.

The CCM 250 or ACM 190 may receive the representation of the one or more posture signals and then, in one embodiment, select one of the plurality of predetermined postures or posture groupings which most closely resembles, i.e. is the best fit to, the received posture signals. A signal indicative of the determined posture is output in dependence thereon.

As indicated in Figure 3, the motorcycle 100 may, in some embodiments, comprise a rider interface means 191. The rider interface means 191 may be a device 191 for receiving an input from the rider of the motorcycle 100. The rider interface means may comprise means for outputting information to the rider and for receiving the input in response thereto. The rider input means 191 is communicably coupled to the ACM 190. Although the ACM 190 is shown as directly coupled to the rider input means 191 in Figure 3, it will be appreciated that the coupling may be indirect, such as via a communication bus of the motorcycle 100. In some embodiments, the ACM 190 is arranged to determine when communication with the CCM 250 is achieved and to request an input from the rider of the motorcycle 100 confirming that the rider wishes to have the regenerative braking torque of the motorcycle dynamically determined in dependence on the posture. For example, if the clothing is being worn by a pillion on the motorcycle 100 it may be inappropriate for the posture to be used to control the regenerative braking torque of the motorcycle, or the rider may simply not wish to have the regenerative braking torque determined in dependence on their posture. Therefore, in some embodiments, the regenerative braking torque may only be dynamically determined in dependence on the rider's posture if confirmation is received via the rider input means 191.

As discussed above, the motor control unit 180 is communicatively coupled to the ACM 190. The motor control unit 180 of the motorcycle 100 is arranged to determine the motor control signal 185 comprising the regeneration control signal 185 in dependence on the determined posture of the rider of the motorcycle 100. As noted above, the regeneration control signal 185 is indicative of the regenerative braking torque applied to the at least one wheel 110 of the motorcycle 100 by the electric machine 130 associated therewith when operative in the regeneration mode.

In some embodiments, the motor control unit 180 is arranged to determine a vehicle state of the motorcycle 100, wherein the regeneration control signal 185 is determined, in part, in dependence on the vehicle state. The vehicle state may be indicative of one or more controls 340 operated by the rider of the motorcycle 100. The one or more controls 340 may comprise one or both of a throttle control of the motorcycle 100 and one or more brake controls of the motorcycle 100 (it being remembered that some motorcycles have independent controls for front and rear brakes). The throttle control may be a twist-grip control mounted about the handlebar 170 of the motorcycle 100. The one or more brake controls may comprise a brake lever attached to the handlebar and/or a foot-operated brake control. Signals indicative of the state of the one or more vehicle controls 340 are provided to the motor control unit 180 which may determine the regeneration control signal 185 partly in dependence thereon. For example, the regeneration control signal 185 may be indicative of a greater regenerative braking torque when the brake(s) of the motorcycle 100 are applied than when said brakes are not applied.

The vehicle state may further comprise one or more operating parameters of the motorcycle which may include one or more of a speed of the motorcycle, a lean angle of the motorcycle i.e. with respect to the ground, and a state of charge of the power storage means 150. It will be appreciated that the vehicle state may comprise other or alternative operating parameters of the motorcycle 100.

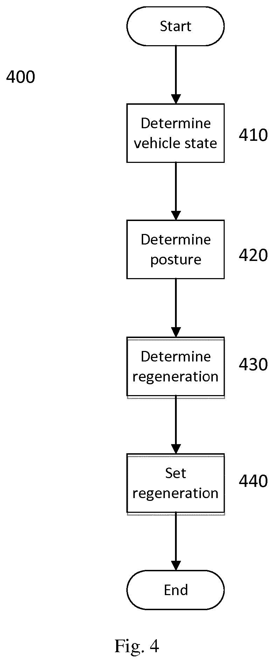

Figure 4 illustrates a method 400 according to an embodiment of the invention. The method 400 may be a method 400 of controlling an electric vehicle according to an embodiment of the invention, such as an electric motorcycle 100 as illustrated in Figures 1 and 3. In particular, the method 400 may determine the regeneration control signal 185 indicative of the regenerative braking torque applied to a wheel of the electric vehicle, as will be explained. The method 400 will be explained with reference to the motorcycle 100 and clothing 200 described above.

The method 400 comprises an optional step 410 of determining a vehicle state of the motorcycle 100. As noted above, the vehicle state may be indicative of one or more controls 340 operated by the rider of the motorcycle 100 such as one or both of a throttle control of the motorcycle 100 and one or more brake controls of the motorcycle 100. In some embodiments the vehicle state comprises one or more of a speed of the motorcycle, a lean angle of the motorcycle with respect to the ground and a state of charge of the power storage means 150 of the motorcycle 100.

In step 420 of the method 400, a posture of the rider of the motorcycle 100 is determined. The posture may be determined in dependence on one or more posture signals output by sensing devices 210, 220, 230, 240 associated with the clothing 200 worn by the rider of the motorcycle 100. Step 420 may comprise receiving the one or more posture signals from one or more sensing devices associated with the motorcycle clothing 200 worn by the rider of the motorcycle 100. As noted, above at least some of the posture signals may be indicative of a pressure applied to a respective portion of the clothing 200 associated with each sensing device 210, 220, 230, 240, such as a back region, an arm region, a leg or knee region etc. At least some of the posture signals may be indicative of an angle between portions of a sensing device indicative of an angle of a portion of the clothing such as an arm i.e. elbow, or leg i.e. knee region of the clothing.

The posture of the rider of the motorcycle 100 is determined in dependence on the one or more posture signals. As noted above, in some embodiments the posture of the rider is selected as one of a plurality of predetermined postures or posture groupings.

The method 400 comprises a step 430 of determining the regeneration control signal 185 in dependence on the determined posture of the rider of the motorcycle 100. In some embodiments, the regeneration control signal 185 may be determined according to a magnitude of the rider-operated braking torque requested by the rider of the motorcycle. The regeneration control signal 185 is indicative of the regenerative braking torque applied to at least one wheel of the motorcycle 100 by the electric machine 130, 140 associated with said wheel, when the electric machine 130, 140 is operative in the regeneration mode. The regeneration control signal 185 is determined in dependence on the posture determined in step 430. In some embodiments, the regeneration control signal 185 is determined, in part, based on the vehicle state determined in step 410, such as a state of the one or more controls 340 of the motorcycle 100 operated by the rider. Thus as a result of step 430 the magnitude of the regenerative braking force to be applied to the at least one wheel of the motorcycle 100 is determined. In some embodiments, step 430 comprises determining the magnitude of the rider-operated braking torque requested by the rider, such as according to a position or operation of the one or more braking controls of the motorcycle 100, and determining a proportion of the total rider-operated braking torque to be provided from regenerative braking torque. That is, step 430 may comprise determining a relative proportion of regenerative braking torque to friction-braking torque to be applied to the one or more wheels of the motorcycle. For example, in some embodiments of step 430, a speed of the motorcycle 100 may be determined and the magnitude of rider-operated braking torque requested by the rider. At slower speeds, a greater proportion of braking torque may be provided as friction-based braking torque than regeneration braking torque, whereas at higher-speeds a greater proportion of the total magnitude may be provided by regenerative braking torque.

The method 400 comprises a step 440 of applying the regenerative braking torque to the at least one wheel of the motorcycle 100 according to the regeneration control signal 185. The regeneration control signal 185 may be provided to the electric machine 130, 140 in order to cause said electric machine 130, 140 to operate in the regeneration mode. When in the regeneration mode, rotation induced in the electric machine 130, 140 is used to generate an electrical current which is used to charge to the power storage means 150, such as the battery, of the motorcycle 100.

Thus it can be appreciated that the regenerative braking torque applied to the at least one wheel of the motorcycle 100 by the electric machine is controlled in dependence on the rider's posture on the motorcycle. The regenerative braking torque automatically adapts to the rider's style of riding of the motorcycle in dependence on their riding posture.

Referring to Figure 5, an illustration of the posture of the rider 500 determined according to an embodiment of the invention is illustrated.

In some embodiments the posture comprises an inclination of at least a portion of a torso of the rider 500 of the motorcycle 100. The inclination may be indicative of a relative angle between the torso of the rider 500 and the motorcycle 100. In some embodiments it is determined when said posture of the rider of the motorcycle is indicative of an upper torso of the rider of the motorcycle being generally parallel to the motorcycle (100). In such posture, the regeneration control signal 185 may be determined to indicative of a relatively lower regenerative braking torque so as not to affect handling of the motorcycle 100. In this posture, it is expected that the rider is expecting to ride or turn the motorcycle 100 at higher speeds and thus desires less regenerative braking torque to be applied. Conversely the regeneration control signal 185 may be determined to be indicative of a relatively greater or higher regenerative braking torque when the posture of the rider 500 of the motorcycle is indicative of an upper torso of the rider 500 being generally perpendicular to the motorcycle 100, as indicated by arrow 510.

The posture may comprise an extension of at least one arm or leg of the rider of the motorcycle. When the arm is extended in a generally linear manner, the regeneration control signal 185 may be determined to be indicative of a relatively greater or higher regenerative braking torque as the rider's posture allows greater bracing of the rider 500 against deceleration of the motorcycle 100.

In some embodiments the posture comprises a lean or rotation of the rider 500 of the motorcycle 100 about a longitudinal axis of the motorcycle 100. In other words, whether the rider 100 is rotated alongside the side of the motorcycle 100, as indicated by arrow 520. When so rotated 520 from a position generally on top of the motorcycle 100 to at least partially alongside of the motorcycle 100, the motor control unit 180 may apply relatively lower regenerative braking torque so as not to affect handling of the motorcycle 100

It can be appreciated that embodiments of the invention control the regenerative braking torque arising from regeneration without the rider of the motorcycle 100 being required to provide an input, which advantageously allows greater rider concentration of other matters, which may improve safety.

It will be appreciated that embodiments of the present invention can be realised in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as claimed in any preceding claim and a machine readable storage storing such a program. Still further, embodiments of the present invention may be conveyed electronically via any medium such as a communication signal carried over a wired or wireless connection and embodiments suitably encompass the same.

## Claims

1. A method, comprising:
determining a posture of a rider of a motorcycle in dependence on a posture signal output by one or more sensing means associated with motorcycle clothing worn by a rider of a motorcycle;
determining a regeneration control signal in dependence on the posture of the rider of the motorcycle;
applying a regenerative braking torque to at least one wheel of the motorcycle in dependence on the regeneration control signal.

2. The method of claim 1, wherein the posture comprises one or more of:
an inclination of at least a portion of a torso of the rider of the motorcycle;
an extension of at least one arm of the rider of the motorcycle; and
a lean of the rider of the motorcycle about a longitudinal axis of the motorcycle.

3. The method of claim 1 or 2, comprising receiving the posture signal from the one or more sensing means associated with the motorcycle clothing.

4. The method of claim 3, wherein the posture signal is wirelessly received.

5. The method of any of claims 1 to 4, wherein the regeneration control signal is determined to be indicative of a relatively lower regenerative braking torque when said posture of the rider of the motorcycle is indicative of an upper torso of the rider of the motorcycle being generally parallel to the motorcycle.

6. The method of any of claims 1 to 5, wherein the regeneration control signal is determined to be indicative of a relatively greater regenerative braking torque when said posture of the rider of the motorcycle is indicative of an upper torso of the rider of the motorcycle being generally perpendicular to the motorcycle.

7. The method of any of claims 1 to 6, comprising determining a vehicle state of the motorcycle wherein the regeneration control signal is determined in dependence on the vehicle state.

8. The method of claim 7, wherein the vehicle state is indicative of one or more controls operated by the rider of the motorcycle.

9. The method of claim 7 or 8, wherein the vehicle state comprises determining a brake rider input.

10. The method of claim 9, wherein the brake rider input is indicative of a magnitude of rider-requested braking torque and the method comprises determining the regeneration control signal indicative of a proportion of the rider-requested braking torque as regenerative braking torque.

11. The method of claim 10, wherein the method comprises determining the regeneration control signal indicative of the proportion of the rider-requested braking torque as regenerative braking torque to friction-based braking torque.

12. The method of any of claims 7 to 11, wherein determining the vehicle state comprises one or more of:
determining a speed of the motorcycle;
determining a lean angle of the motorcycle; and
determining an accelerator rider input.

13. Computer program which, when executed by a computer, is arranged to perform a method according to any of claims 1 to 12.

14. The computer program of claim 13 stored on a computer-readable medium.

15. A motorcycle comprising a control unit configured to carry out the method of any one of claims 1 to 12.

16. A system comprising the motorcycle of claim 15 and motorcycle clothing comprising sensing means for determining a posture of a motorcycle rider wearing said clothing and outputting a posture signal indicative thereof.

## Patentansprüche

1. Verfahren, umfassend:
Bestimmen einer Haltung eines Fahrers eines Motorrads in Abhängigkeit von einem Haltungssignal, das von einem oder mehreren Erfassungsmitteln ausgegeben wird, die der Motorradbekleidung zugeordnet sind, die von einem Fahrer eines Motorrads getragen wird;
Bestimmen eines Regenerationssteuersignals in Abhängigkeit von der Haltung des Fahrers des Motorrads;
Anwenden eines regenerativen Bremsmoments auf mindestens ein Rad des Motorrads in Abhängigkeit von dem Regenerationssteuersignal.

2. Verfahren nach Anspruch 1, wobei die Haltung ferner eines oder mehrere umfasst von:
eine Neigung mindestens eines Abschnitts des Oberkörpers des Fahrers des Motorrads;
eine Verlängerung von mindestens einem Arm des Fahrers des Motorrads; und
eine Schräglage des Fahrers des Motorrads um eine Längsachse des Motorrads.

3. Verfahren nach Anspruch 1 oder 2, umfassend das Empfangen des Haltungssignals von dem einen oder den mehreren Erfassungsmitteln, die der Motorradbekleidung zugeordnet sind.

4. Verfahren nach Anspruch 3, wobei das Haltungssignal drahtlos empfangen wird.

5. Verfahren nach einem der Ansprüche 1 bis 4, wobei das Regenerationssteuersignal bestimmt wird, um eine Angabe für ein relativ geringeres regeneratives Bremsmoment zu machen, wenn die Haltung des Fahrers des Motorrads angibt, dass ein Oberkörper des Fahrers des Motorrads im Allgemeinen parallel zum Motorrad ist.

6. Verfahren nach einem der Ansprüche 1 bis 5, wobei das Regenerationssteuersignal bestimmt wird, um eine Angabe für ein relativ größeres regeneratives Bremsmoment zu machen, wenn die Haltung des Fahrers des Motorrads angibt, dass ein Oberkörper des Fahrers des Motorrads im Allgemeinen senkrecht zum Motorrad steht.

7. Verfahren nach einem der Ansprüche 1 bis 6, umfassend das Bestimmen eines Fahrzeugzustands des Motorrads, wobei das Regenerationssteuersignal in Abhängigkeit von dem Fahrzeugzustand bestimmt wird.

8. Verfahren nach Anspruch 7, wobei der Fahrzeugzustand Angaben zu einem oder mehreren vom Fahrer des Motorrads betätigten Steuerelementen enthält.

9. Verfahren nach Anspruch 7 oder 8, wobei der Fahrzeugzustand das Bestimmen einer Fahrerbremseingabe umfasst.

10. Verfahren nach Anspruch 9, wobei die Fahrerbremseingabe eine Größe eines vom Fahrer angeforderten Bremsmoments angibt und das Verfahren das Bestimmen des Regenerationssteuersignals umfasst, das einen Anteil des vom Fahrer angeforderten Bremsmoments als regeneratives Bremsmoment angibt.

11. Verfahren nach Anspruch 10, wobei das Verfahren das Bestimmen des Regenerationssteuersignals umfasst, das das Verhältnis des vom Fahrer angeforderten Bremsmoments als regeneratives Bremsmoment zum reibungsbasierten Bremsmoment angibt.

12. Verfahren nach einem der Ansprüche 7 bis 11, wobei das Bestimmen des Fahrzeugzustands eines oder mehreres von Folgendem umfasst:
Bestimmen einer Geschwindigkeit des Motorrads;
Bestimmen einer Schräglage des Motorrads; und
Bestimmen einer Beschleunigerfahrereingabe.

13. Computerprogram, das, wenn es durch einen Computer ausgeführt wird, eingerichtet ist, ein Verfahren nach einem der Ansprüche 1 bis 12 durchzuführen.

14. Computerprogram nach Anspruch 13, das auf einem computerlesbaren Medium gespeichert ist.

15. Motorrad, umfassend eine Steuereinheit, die konfiguriert ist, das Verfahren nach einem der Ansprüche 1 bis 12 auszuführen.

16. System, umfassend das Motorrad nach Anspruch 15 und Motorradbekleidung, umfassend Erfassungsmittel zum Bestimmen einer Haltung eines Motorradfahrers, der die Bekleidung trägt, und zum Ausgeben eines Haltungssignals, das diese anzeigt.

## Revendications

1. Procédé, comprenant :
la détermination d'une posture d'un conducteur d'une motocyclette en fonction d'un signal de posture émis par un ou plusieurs moyens de détection associés à un vêtement de moto porté par un conducteur d'une motocyclette ;
la détermination d'un signal de commande de régénération en fonction de la posture du conducteur de la motocyclette ;
l'application d'un couple de freinage régénératif à au moins une roue de la motocyclette en fonction du signal de commande de régénération.

2. Système selon la revendication 1, dans lequel la posture comprend une ou plusieurs parmi :
une inclinaison d'au moins une partie d'un torse du conducteur de la motocyclette ;
une extension d'au moins un bras du conducteur de la motocyclette ; et
un penchement du conducteur de la motocyclette autour d'un axe longitudinal de la motocyclette.

3. Procédé selon la revendication 1 ou 2, comprenant la réception du signal de posture à partir du ou des moyens de détection associés au vêtement de moto.

4. Procédé selon la revendication 3, dans lequel le signal de posture est reçu sans fil.

5. Procédé selon l'une quelconque des revendications 1 à 4, dans lequel le signal de commande de régénération est déterminé comme indiquant un couple de freinage régénératif relativement plus faible lorsque ladite posture du conducteur de la motocyclette indique qu'un torse supérieur du conducteur de la motocyclette est généralement parallèle à la motocyclette.

6. Procédé selon l'une quelconque des revendications 1 à 5, dans lequel le signal de commande de régénération est déterminé comme indiquant un couple de freinage régénératif relativement plus important lorsque ladite posture du conducteur de la motocyclette indique qu'un torse supérieur du conducteur de la motocyclette est généralement perpendiculaire à la motocyclette.

7. Procédé selon l'une quelconque des revendications 1 à 6, comprenant la détermination d'un état de véhicule de la motocyclette, dans lequel le signal de commande de régénération est déterminé en fonction de l'état de véhicule.

8. Procédé selon la revendication 7, dans lequel l'état de véhicule indique une ou plusieurs commandes actionnées par le conducteur de la motocyclette.

9. Procédé selon la revendication 7 ou 8, dans lequel l'état de véhicule comprend la détermination d'une action de freinage exercée par le conducteur.

10. Procédé selon la revendication 9, dans lequel l'action de freinage exercée par le conducteur indique une amplitude de couple de freinage demandé par le conducteur et le procédé comprend la détermination du signal de commande de régénération indiquant une proportion du couple de freinage demandé par le conducteur comme couple de freinage régénératif.

11. Procédé selon la revendication 10, dans lequel le procédé comprend la détermination du signal de commande de régénération indiquant la proportion du couple de freinage demandé par le conducteur comme couple de freinage régénératif par rapport au couple de freinage basé sur le frottement.

12. Procédé selon l'une quelconque des revendications 7 à 11, dans lequel la détermination de l'état de véhicule comprend un ou plusieurs parmi :
la détermination d'une vitesse de la motocyclette ;
la détermination d'un angle de penchement de la motocyclette ; et
la détermination d'une action sur l'accélérateur exercée par le conducteur.

13. Programme informatique qui, lorsqu'il est exécuté par un ordinateur, est conçu pour réaliser un procédé selon l'une quelconque des revendications 1 à 12.

14. Programme informatique selon la revendication 13 stocké sur un support lisible par ordinateur.

15. Motocyclette comprenant une unité de commande configurée pour réaliser le procédé selon l'une quelconque des revendications 1 à 12.

16. Système comprenant la motocyclette selon la revendication 15 et un vêtement de moto comprenant des moyens de détection pour déterminer une posture d'un conducteur de motocyclette portant ledit vêtement et émettant un signal de posture indiquant cela.
